Europäisches Patentamt

European Patent Office

Office européen des brevets

(19)

(11) Publication number: **0 218 335**
**A2**

# EUROPEAN PATENT APPLICATION

(12)

(21) Application number: **86306266.7**

(22) Date of filing: **14.08.86**

(51) Int. Cl.⁴: **G 06 F 9/26**

(30) Priority: **30.08.85 US 771371**

(43) Date of publication of application: **15.04.87**
**Bulletin 87/16**

(84) Designated Contracting States: **AT BE CH DE FR GB IT LI LU NL SE**

(71) Applicant: **ADVANCED MICRO DEVICES, INC., 901 Thompson Place P.O. Box 3453, Sunnyvale, CA 94088 (US)**

(72) Inventor: **Johnson, Michael, 5064 Rhonda Drive, San Jose, CA 95129 (US)**
Inventor: **Case, Brian, 575 Rengstorff Nr. 113, Mt. View, CA 94043 (US)**
Inventor: **Fleck, Rod, 928 Wright Avenue Nr. 304, Mt. View, CA 94043 (US)**

(74) Representative: **Wright, Hugh Ronald et al, Brookes & Martin 52/54 High Holborn, London WC1V 6SE (GB)**

(54) **Control store for electronic processor.**

(57) A self-contained user-defined control store is tightly-coupled to a reduced instruction-set processor chip. Special access is provided without off-chip handshaking protocol, acknowledgement or the use of additional circuitry, so that the control store coexists with a main instruction memory through the use of a separate address space. The external control store is preferably a programmable read only memory (PROM) in which a single enable signal initiates access to the PROM. A ROM 'configuration' register within the RISC processor can be set by the user to indicate the ROM access time and a status register contains a bit position which indicates whether instructions are to be fetched from the normal instruction memory or from the external control store. The external control store can be used for certain commonly-occurring procedures such as powe-on and system routines, diagnostics, interrupt- and trap-handling, hardware memory management and macros. In an illustrative application implementing trap-handling, the RISC processor recognizes a set of 'trapped' instructions. The self-contained external control store of the instant invention is directly connectable to a RISC processor of instant invention without additional circuitry or complicated inter-chip communication protocols.

CONTROL STORE FOR ELECTRONIC PROCESSOR

This invention relates to storage elements of digital computers, and more particularly, to an external control store tightly-coupled to a reduced instruction-set computer which enables the user to custom design certain functions supervised by the computer's instruction processor.

BACKGROUND OF THE INVENTION

Prior art reduced instruction-set computers (RISCs) do not employ a processor having a control store memory since RISCs are traditionally not microprogrammable. Hence, the instructions of a RISC are fetched directly from a normal instruction memory rather than from a control store containing the various sequences of microinstructions used to implement the computer's instruction set.

Since prior art RISCs are typically manufactured as a single monolithic integrated circuit chip, they have their instruction set stored in a user-inaccessible on-chip memory, the user is unable to modify the internal operation of the RISC processor of functions other than normal instruction set interpretation. Such functions, which it may be desirable to modify, would include power-on initialization, translation look-aside buffer reload, macro routines for floating-point operations, interrupts, traps and diagnostics. These functions could be made available to the user by providing a read-only memory (ROM) portion of the main memory used by the RISC, but this would reduce the amount of random access memory (RAM) available due to address limitations and is often not well-suited for diagnostic operations without the addition of extra off-chip support circuitry.

Accordingly, there is a need for a control store external to a single-chip RISC processor which permits the user to custom-design certain functions and yet does not exact the large time penalty usually associated with fetching instructions from off-chip storage devices.

The self-contained user-defined control store which is to be described is tightly-coupled to a reduced instruction-set processor chip. Special access is provided without off-chip handshaking protocol, acknowledgement or the use of additional circuitry, so that the control store coexists with a main instruction memory through the use of a separate address space. The external control store is preferably a programmable read only memory (PROM) in which a single enable signal initiates access to the PROM. A ROM "configuration" register within the RISC processor can be set by the user to indicate the ROM access time, thereby eliminating the need to generate an access complete signal. A status register within the RISC processor contains a bit position which indicates whether instructions are to be fetched from the normal instruction memory or from the external control store.

The PROM storage provided by the described arrangement can be used for certain commonly-occurring procedures such as power-on and system routines, diagnostics, interrupt- and trap-handling, hardware memory management and macros. In an illustrative application implementing trap-handling, the RISC processor recognizes a set of "trapped" instructions, execution of which causes the processor to direct control to one of 256 vector table entries. The vector table entries cause the processor to save return addresses and set the bit position of the processor status register mentioned earlier so that the starting instruction address of a user-defined trap routine will be accessed from the external control store. At the end of the trap routine, the return address and the contents of the status register which had been saved are used to return to the original routine which contained the trapped instruction.

The self-contained external control store of the instant invention is directly connectable to a RISC processor of instant invention without additional circuitry or complicated inter-chip communication protocols. Hence it provides the user with a measure of customization without a significant speed penalty as would normally be the case in an off-chip control store.

BRIEF DESCRIPTION OF THE DRAWING

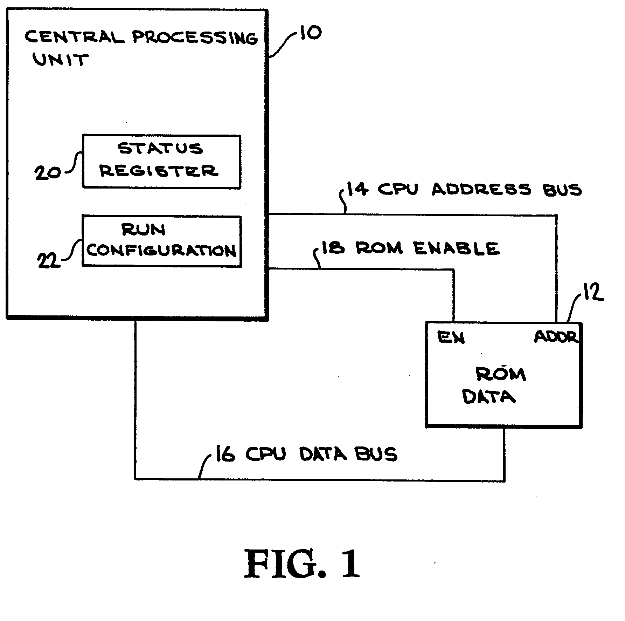

Fig. 1 is a block diagram of a processor of the instant invention employing an external control store of the instant invention.

DETAILED DESCRIPTION OF THE PREFERRED EMBODIMENT

The external control store of the instant invention is best understood by reference to Fig. 1, a block diagram of a digital processor 10 employing the off-chip control store 12. The digital processor 10 is preferably a reduced-instruction set computer (RISC). The instructions executed by processor 10 are fetched from an instruction memory, not shown. The control store 12 contains user-defined routines written in instructions from the instruction set of the RISC, and executed by processor 10. The control store 12 is a read only memory (ROM) of the type which can be programmed by a user, such as a programmable read only memory (PROM), using techniques well known to those skilled in the art. The PROM can be constructed as a monolithic integrated circuit separate from the processor 10.

The control store 12 is connected to the central processing unit (CPU) 10 contained on a separate integrated circuit chip by a set of busses as shown in Fig. 1. A CPU address bus 14 conducts signals generated by a program counter portion of the CPU 10 to an address (ADDR) port of the store 12. A CPU data bus 16 conducts signals representing the instruction located at this address within store 12 and applied to a DATA port thereof to an instruction register within CPU 10. A ROM enable signal generated by the CPU 10 is conducted on a signal line 18 to an enable (EN) terminal of store 12 indicating that the contents of the store at the address applied at the ADDR port is to be accessed and the contents applied to the DATA port of the store 12. The store 12 is of a tightly-coupled design so that the ROM enable signal may be applied directly to the EN terminal of store 12 and the access operation just described will take place without handshaking protocols, generation of an acknowledge signal or the need for other support circuitry.

The control store 12 coexists with a normal instruction memory (not shown in Fig. 1) but uses a separate address space from normal memory so that the simplified access by the CPU 10 can be readily implemented. The CPU 10 includes a status register 20 which contains a bit position which is set to a particular value, for example, binary ONE whenever the CPU 10 is to fetch an instruction from the external store 12 and binary ZERO whenever the CPU is to fetch an instruction from regular memory. The CPU 10 also includes a ROM configuration register 22 which contains a value indicative of the length of time required for the store 12 access operation described above. In this manner, no acknowledge signal need be generated by the store 12 nor need the CPU 10 wait for such a signal to indicate that a ROM access has been completed.

These features of the CPU 10 and the external control store 12 are desirable to effect tight coupling so as to minimize the time required to go off the CPU 10 chip to fetch an instruction. Such features within a CPU 10 and a self-contained store 12 can be readily designed by one skilled in the art.

In one application of the control store 12, the CPU 10 recognizes a set of so-called "trapped" instructions, which result from an unexpected event occurring during the execution of the instruction. The CPU 10 detects the occurrence of the trap and redirects program control to a trap routine after saving the contents of various registers and establishing an address to which control will pass after the trap routine finishes. For certain trap routines, the routine may be stored in external store 12. In this manner, the user of the CPU 10 may easily customize trap-handling to suit his or her needs.

Other applications of the external control store 12 of the instant invention will be appreciated by those skilled in the art in which a specific user-supplied set of routines are desired.

These applications would be power-on routines, system routines, diagnostics, interrupt-handlers, hardware memory management and macro routines.

0218335

CLAIMS

1. A control store formed as a first integrated circuit chip for use with a digital processor control formed as a second integrated circuit chip capable of generating a plurality of special instruction access signals which cyclically executes instructions fetched selectably from said external control store or a fixed instruction store located on said second chip, said control store comprising:

a plurality of means responsive to said special instruction access signals each for storing a plural-bit word each having a location designator and for generating at an output signals representative of said stored word,

whereby said generated signals are conducted to said digital processor control and said word so represented executed.

2. An external control store for use with a processor control according to claim 1 wherein said processor control includes register means for storing a plural-bit status word having a predetermined special access bit position, said special access bit position set to a first binary value indicative of an instruction which is to be fetched from said instruction store on said second chip and set to a second binary value indicative of an instruction which is to be fetched from said external control store on said first chip.

3. An external control store for use with a processor control according to claim 2 wherein said plurality of special instruction access signals generated by said processor control includes a read enable signal and a location designator signal, and wherein said plurality of storage means is responsive to said read enable and location designator signals,

whereby upon reception of said read enable signal said storage means generates at said output said signal representative of said plural-bit contents of said word at said location designator represented by said location designator signal.

4. An external control store for use with a processor control according to claim 2 wherein said processor control further includes register means for storing a plural-bit configuration word indicating the time required to fetch said word from said control store.

5. An external control store for use with a processor control according to claim 1 wherein said storage means of said external control store is a programmable read only memory.

6. An external control store for use with a processor control according to claim 3 wherein said fixed instruction store comprises a plurality of means each for storing a plural-bit word each having a location designator, and wherein each location designator of said storage means of said external control store is part of an address space separate from that of each location designator of said storage means of said fixed instruction store.

FIG. 1